Europäisch Patentamt

European Patent Office

Office européen des brevets

Veröffentlichungsnummer: **0 285 771**

**A1**

# EUROPÄISCHE PATENTANMELDUNG

Anmeldenummer: 88102043.2

Int. Cl.4: **B01F 17/00 , C09D 1/04**

Anmeldetag: 12.02.88

Priorität: 10.04.87 DE 3712206

Veröffentlichungstag der Anmeldung:
12.10.88 Patentblatt 88/41

Benannte Vertragsstaaten:
AT BE CH DE ES FR GB GR IT LI LU NL SE

Anmelder: Benckiser-Knapsack GmbH
Dr. Albert-Reimann-Strasse 2
D-6802 Ladenburg(DE)

Erfinder: Werle, Richard
Repsgasse 2
D-6806 Viernheim(DE)
Erfinder: Beurich, Harald, Dr.
Kettelerstrasse 6
D-6802 Ladenburg(DE)
Erfinder: Kleemann, Stephan G., Dr.
Schlederloh 15
D-8021 Icking(DE)

Vertreter: Grussdorf, Jürgen, Dr. et al
Patentanwälte Zellentin & Partner
Rubensstrasse 30
D-6700 Ludwigshafen(DE)

Verwendung von Mischungen aus einem wasserlöslichen Diphosphat, einem anionischen Netzmittel sowie Alkalihydroxid als Dispergator.

Die vorliegende Erfindung betrifft Dispergatoren aus wasserlöslichem Diphosphat, anionischen Netzmitteln und Alkalihydroxid sowie alkalische Anstrichmittel, welche diese enthalten.

EP 0 285 771 A1

0 285 771

## Verwendung von Mischungen aus einem wasserlöslichen Diphosphat, einem anionischen Netzmittel sowie Alkalihydroxid als Dispergator

Gegenstand der vorliegenden Erfindung sind alkalibeständige Dispergatoren und ihre Verwendung in wasserglashaltigen Farben.

Keine Klasse von Lacken, Beschichtungsmitteln und Anstrichstoffen hat in den letzten 30 Jahren eine so stürmische und anhaltende Aufwärtsentwicklung erlebt wie die Kunststoffdispersionsfarben, Kunstharzputze und neuerdings die wasserglashaltigen "Silikatfarben".

"Silikatfarben" bestehen gemäß DIN 18 363 aus Kaliwasserglas und wasserglasbeständigen Pigmenten; Dispersionssilikatfarben bzw. "Organosilikatfarben" enthalten zusätzlich noch bis zu 5% einer Kunststoffdispersion. Das Hauptbindemittel für beide Typen von "Silikatfarben" ist Kaliumwasserglas, d.h. ein Kaliummetasilikat mit einem Molverhältnis von $K_2O$ zu $SiO_2$ von 1:3,5-3,9, vorzugsweise 1:3,9. Aufgrund ihres chemischen Aufbaus sind alle "Silikatfarben" stark alkalisch und weisen einen pH-Wert oberhalb von 11 auf. Während reine "Silikatfarben" in den meisten Fällen keinen Dispergator enthalten, ist bei Dispersionssilikatfarben der Zusatz eines dispergierenden Additives unerläßlich.

Ein großer Vorteil der "Silikatfarben" bzw. "Organosilikatfarben" liegt in ihrem unerreicht niederen Wasserdampf-Diffusionswiderstand, d.h. der hohen Durchlässigkeit von Wasserdampf. Dieser Diffusionswiderstand ist ca. 10mal geringer als bei filmbildenden Acrylat-Styrol-Copolymer-bzw. Reinacrylat-Dispersionsfarben. Dadurch kann Feuchtigkeit im Untergrund bedeutend schneller an die Umgebung abgegeben werden, was sich sowohl auf die Wärmedämmung als auch die Klimatisierung von Innenräumen vorteilhaft auswirkt. Weiterhin sind "Silikatfarben" für ihre extrem hohe Wetterbeständigkeit und Lebensdauer bekannt. Beim Arbeiten mit "Silikatfarben" bzw. "Organosilikatfarben" ist allerdings zu berücksichtigen, daß das eingesetzte Kali-Wasserglas als Salz einer starken Base (Kalilauge) und einer schwachen Säure (Kieselsäure) in hohem Maße alkalisch ist. Neben der Berücksichtigung entsprechender Sicherheitsmaßnahmen stellt dieser extrem hohe pH-Wert auch ganz neue Anforderungen an die darin verwendeten Zusatzstoffe bzw. Hilfsmittel. Besondere Probleme bereitet hierbei die Wahl eines geeigneten Dispergators, da die bekannten Dispergiermittel wie beispielsweise die Polyphosphate oder Polyacrylate in diesem basischen Milieu zu schnell hydrolisieren und damit ihre Wirksamkeit einbüßen.

Nach dem Stand der Technik werden als Dispergatoren für dieses Einsatzgebiet entweder Kaliumhexametaphosphat oder Tetrakaliumpyrophosphat eingesetzt. Während Kaliumhexametaphosphat aufgrund seines schlechten Dispergierverhaltens heute fast nicht mehr zur Anwendung gelangt, zeigt Tetrakaliumpyrophosphat eine recht gute Dispergierwirkung unter den geforderten Bedingungen. Allerdings weisen die mit Tetrakaliumpyrophosphat versetzten "Silikatfarben" bzw. "Organosilikatfarben" eine insgesamt zu hohe Thixotropie auf (siehe Graphik 1). Diesem Nachteil wird durch Verwendung des erfindungsgemäßen Dispergatorsystems begegnet. Wie aus den Dispergierkurven und der daraus berechneten Thixotropiefläche zu erkennen ist, kann durch Einsatz der erfindungsgemäßen Dispergatoren eine bedeutende Verbesserung des rheologischen Verhaltens der damit hergestellten Farben erzielt werden.

Ziel der vorliegenden Erfindung war es, Dispergatoren zu entwickeln, welche neben guten dispergierenden Eigenschaften auch ein extremes Maß an Hydrolysebeständigkeit in sich vereinigen. Zusätzlich sollten sie einen positiven Einfluß auf die rheologischen Eigenschaften des gesamten Farbsystems ausüben, d.h. in einer möglichst geringen Thixotropie resultieren.

Überraschenderweise wurde nun gefunden, daß eine alkalische wässrige Lösung eines Diphosphats, vorzugsweise Tetrakaliumdiphosphat, mit einem anionischen Netzmittel, in geradezu idealer Weise diese Anforderungen erfüllt. Dies ist umso überraschender, da die sehr guten und bekannten Dispergatoren aus der Gruppe der Polyphosphate für diese Zwecke nicht geeignet sind.

Eine allgemeine Rezeptur nach DIN 18369 (Okt. 1979) zum Einsatz der erfindungsgemäßen Dispergatoren enthält folgende Bestandteile:

- Kaliwasserglas
- Kaliwasserglasbeständige Pigmente u. Füllstoffe

bei Organosilikatfarben zusätzlich noch Kunststoffdispersionen bis zu 5 Gew.-% bezogen auf die Gesamtmenge des Anstrichstoffes.

Die Verwendung der erfindungsgemäßen Dispergatoren in den vorstehenden Anstrichmitteln (Silikatfarben und Dispersionssilikatfarben) wird bevorzugt, jedoch sind diese mit Vorteil auch in anderen alkalischen Anstrichmitteln, z. B. alkalischen Klebern, alkalischen Farben und alkalischen Putzen zu verwenden, da sie auch in diesen eine Langzeit-stabile Dispersionsfähigkeit mit großer Hydrolysestabilität,

2

geringer Viskositätserhöhung und Tixotropie vereinigen.

Die erfindungsgemäßen Dispergatoren können in fester Form eingesetzt werden. Zur einfacheren Vermischung mit den alkalischen Anstrichmitteln wird jedoch eine wäßrige Lösung mit Feststoffgehalten von 10-80 % bevorzugt. Konzentriertere Lösungen, die die Anstrichmittel nicht zu sehr verdünnen, sind besonders günstig.

Als wasserlösliche Diphosphate kommen vor allem Natrium-und Kaliumsalze in Frage. Aufgrund seiner Wasserlöslichkeit wird das Tetrakaliumdiphosphat bevorzugt. Die Diphosphate sind in Mengen von 20-80 Gew.-% des trockenen oder 10-40 % des wäßrigen Dispergators enthalten. Als Netzmittel kommen alle anionenaktiven Netzmittel in Frage, die in stark alkalischen Lösungen mit pH-Werten von 8-14 stabil sind. Alkylpolyglykolethersulfate, Alkylsulfate, Alkylarylsulfonate, Alkylsulfonate und Alkylcarbonate mit Alkylgruppen von 10-20 C-Atomen werden bevorzugt. Das Netzmittel ist in einer Menge von 1-40 Gew.-% des trockenen bzw. 0,5-20 % des wäßrigen Dispergators enthalten.

Alkalihydroxid oder Alkalicarbonat, vorzugsweise Kaliumhydroxid muß in dem Dispergator in einer Menge enthalten sein, die einen pH-Wert der Mischung von 8-14 einstellt, so daß sich beim Vermischen mit dem alkalischen Anstrichmittel der pH-Wert desselben nicht wesentlich ändert.

Soweit diese Stoffe nicht in ausreichender Menge in den alkalischen Anstrichmitteln enthalten sind, können die zuzusetzenden Dispergatoren auch ihrerseits noch Füllstoffe, Pigmente, Entschäumer etc. enthalten. Diese Stoffe können in einer Menge von 0-50 % des Dispergators enthalten sein.

Der Dispergator wird üblicherweise in einer Menge von 0,1-5 Gew.-% des Anstrichmittels zugegeben, 0,2-2 % des trockenen bzw. 0,5-3 % des in Wasser gelösten Dispergators sind bevorzugt.

Die folgenden Beispiele sollen die Vorteile der erfindungsgemäßen Systeme im Vergleich zu verschiedenen bekannten Dispergatoren verdeutlichen.

Die dabei verwendeten Dispergatoren haben folgende Zusammensetzung:

Dispergator 1: 30% Tetrakaliumdiphosphat,5 % "Ethoxylat" (anionisches Netzmittel), 40 % KOH (50 %ig) und 25 % Wasser.

Dispergator 2: Natriumpolyphosphat mit 64% $P_2O_5$-Gehalt

Dispergator 3: Natriumpolyacrylat mit ca. 40% Wirkstoffgehalt

Dispergator 4: Tetrakaliumpyrophosphat (100%)

## Beispiel 1

Eine "Organosilikatfarbe" entsprechend folgender Richtrezeptur, unter Verwendung des erfindungsgemäßen Dispergatorsystems 1, bestehend aus Tetrakaliumdiphosphat, Netzmittel und wässriger Kalilauge:

2,0 Teile Dispergator 1 (incl. 45 % Wasser)
1,0 Teile Hydroxyethylcellulose
17,5 Teile Titandioxyd
180,0 Teile Calciumcarbonat
2,5 Teile Quarternäre Ammoniumverbindung
170,0 Teile Kali-Wasserglas
32,5 Teile Kunstoffdispersion
1,25 Teile Entschäumer
8,0 Teile Testbenzin
84,75 Teile Wasser

## Beispiel 2

Eine "Organosilikatfarbe" entsprechend folgender Richtrezeptur, unter Verwendung eines käuflichen Dispergators 2 auf Basis von Polyphosphaten:

1,0 Teile Dispergator 2
1,0 Teile Hydroxyethylcellulose
17,5 Teile Titandioxyd·
180,0 Teile Calciumcarbonat
2,5 Teile Quarternäre Ammoniumverbindung
170,0 Teile Kali-Wasserglas

3

32,5 Teile Kunstoffdispersion
1,25 Teile Entschäumer
8,0 Teile Testbenzin
86,25 Teile Wasser

## Beispiel 3

Eine "Organosilikatfarbe" entsprechend folgender Richtrezeptur, unter Verwendung eines käuflichen Dispergators 3 auf Basis von Polyacrylaten:

1,0 Teile Dispergator 3
1,0 Teile Hydroxyethylcellulose
17,5 Teile Titandioxyd
180,0 Teile Calciumcarbonat
2,5 Teile Quarternäre Ammoniumverbindung
170,0 Teile Kali-Wasserglas
32,5 Teile Kunstoffdispersion
1,25 Teile Entschäumer
8,0 Teile Testbenzin
86,25 Teile Wasser

## Beispiel 4

Eine "Organosilikatfarbe" entsprechend folgender Richtrezeptur, unter Verwendung eines Dispergators auf Basis von Tetrakaliumpyrophsophat:

1,0 Teile Dispergator 3
1,0 Teile Hydroxyethylcellulose
17,5 Teile Titandioxyd
180,0 Teile Calciumcarbonat
2,5 Teile Quarternäre Ammoniumverbindung
170,0 Teile Kali-Wasserglas
32,5 Teile Kunstoffdispersion
1,25 Teile Entschäumer
8,0 Teile Testbenzin
86,25 Teile Wasser

In der folgenden Tabelle I sind die nach Brookfield bestimmten Werte bei 20 grd.C in Abhängigkeit von der Lagerzeit wiedergegeben.

## Tabelle I:

| Zeit (Tage) | Probe 1 (mPa.s) | Probe 2 (mPa.s) | Probe 3 (mPa.s) | Probe 4 (mPa.s) |
|---|---|---|---|---|
| sofort | 2.200 | 3.200 | 1800 | 2.500 |
| 1 | 2.400 | 3.400 | 2000 | 2.600 |
| 2 | 2.500 | 3.400 | 2300 | 2.800 |
| 5 | 3.800 | 3.900 | 3400 | 5.200 |
| 6 | 4.000 | 3.500 | 3700 | 4.600 |
| 7 | 4.100 | 3.500 | 3600 | 5.000 |
| 8 | 4.200 | 3.600 | 3800 | 4.600 |
| 9 | 4.400 | 3.700 | 4000 | 4.600 |
| 13 | 4.200 | 4.700 | 4500 | 3.800 |
| 14 | 4.100 | 4.900 | 4400 | 4.000 |
| 15 | 4.100 | 5.100 | 4700 | 4.200 |
| 19 | 3.800 | 5.500 | 4800 | 3.700 |
| 20 | 3.700 | 5.200 | 4900 | 3.700 |
| 23 | 3.800 | 5.500 | 5000 | 3.600 |
| 26 | 3.600 | 5.900 | 5200 | 3.600 |
| 28 | 3.500 | 6.500 | 5400 | 3.200 |
| 30 | 3.200 | 6.400 | 5400 | 3.500 |
| 3 Monate | 3.100 | 7.800 | 6200 | 3.200 |

Die Messungen erfolgten nach Brookfield, bei 100 UPM mit Spindel 6

**Resultat:**

Es ist deutlich zu erkennen, daß die Langzeitviskosität der unter Verwendung des erfindungsgemäßen Dispergators hergestellten Probe 1 sowie der unter Verwendung von Tetrakaliumpyrophosphat hergestellten Probe 4 im Vergleich zu den Proben 2 u. 3 weitaus günstiger ist. Die geringere Viskosität ist dabei als Resultat der Summe der Hydrolysebeständigkeit und der eigentlichen Dispergierwirkung aufzufassen.

Der große Vorteil des erfindungsgemäßen Systems im Vergleich zur Verwendung von Tetrakaliumpyrophosphat wird bei der Messung der Thixotropie des Endsystems deutlich sichtbar. Die Fließ-u. Viskositätskurven sowie die daraus berechnete Thixotropiefläche des Gesamtsystems wurde mittels eines computergesteuerten Viscometer (Viscolab, Fa.Physica) bestimmt. Es ist deutlich die geringere Thixotropiefläche und damit das geringere thixotrope Verhalten der "Silikatfarben" bei Verwendung des erfindungsgemäßen Systems (Probe 1) zu erkennen.

Thixotropiefläche Beispiel 1: 2289.2 $Pa\,s\,cm^3$
Thixotropiefläche Beispiel 2: 5114.3 $Pa\,s\,cm^3$
Thixotropiefläche Beispiel 3: 4234.1 $Pa\,s\,cm^3$
Thixotropiefläche Beispiel 4: 3654.7 $Pa\,s\,cm^3$

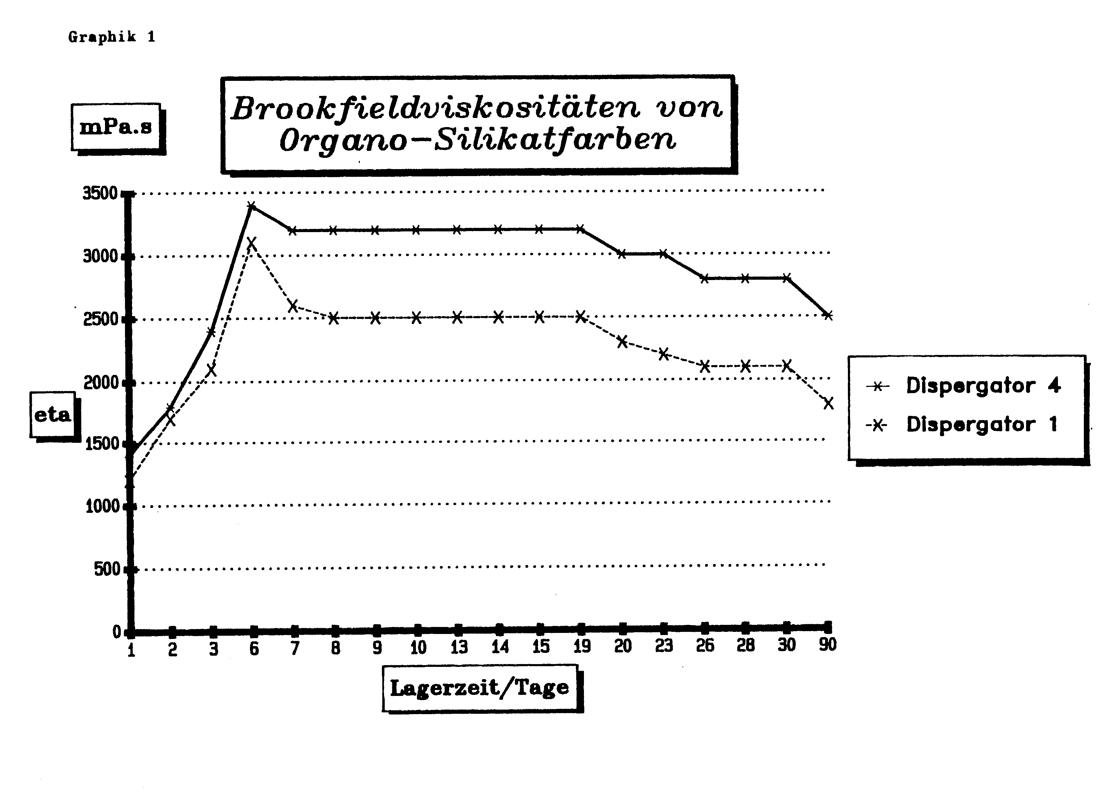

**Ansprüche**

1. Verwendung von Mischungen aus einem wasserlöslichen Diphosphat, einem anionischen Netzmittel sowie Alkalihydroxid als Dispergator.

2. Verwendung gemäß Anspruch 1, dadurch gekennzeichnet, daß die Mischung als wäßrige Lösung vorliegt.

3. Verwendung gemäß Anspruch 1 oder 2, dadurch gekennzeichnet, daß das Diphosphat als Tetrakaliumsalz vorliegt.

4. Verwendung gemäß Anspruch 1 oder 2, dadurch gekennzeichnet, daß das Netzmittel ein verseiftes oder unverseiftes Ethoxylat ist.

5. Verwendung gemäß Anspruch 1 oder 2, dadurch gekennzeichnet, daß das Kaliumhydroxid in einer zur Einstellung eines pH-Werts von 8-14 ausreichenden Menge enthalten ist.

6. Verwendung gemäß Ansprüchen 1 und 2, dadurch gekennzeichnet, daß das Diphosphat in einer Menge von 10-40 Gew.-% enthalten ist.

7. Verwendung gemäß den Ansprüchen 1 und 3, dadurch gekennzeichnet, daß das Netzmittel in einer Menge von 0,5-20 Gew.-% enthalten ist.

8. Alkalische Anstrichmittel, - Kleber, - Farben oder - Putze zur Verwendung in der Bauindustrie, dadurch gekennzeichnet, daß sie einen Dispergator gemäß einem der Ansprüche 1-7 enthalten.

9. Alkalisches Anstrichmittel gemäß Anspruch 8, dadurch gekennzeichnet, daß sie Kaliwasserglas und Kaliwasserglas-beständige Pigmente und 0-5 Gew.-% Kunststoffdispersionen und einen Dispergator gemäß einem der Ansprüche 1-7 enthalten.

Graphik 1

Brookfieldviskositäten von Organo-Silikatfarben

mPa.s

eta

Lagerzeit/Tage

Dispergator 4
Dispergator 1

0 285 771

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 356 882 (PORTER) <br> * Insgesamt * <br> --- | 1-3,5,8 | B 01 F 17/00 <br> C 09 D 1/04 |
| X | CH-A- 637 689 (BULLEN CHEMICAL CO.) <br> * Beispiele I,IV,V; Ansprüche; Seite 5, Spalte 2, Zeilen 31-46 * <br> --- | 1-3,5-9 | |
| X | DE-C- 748 379 (CHEMISCHE WERKE ALBERT IN WIESBADEN) <br> * Insgesamt * <br> --- | 1-3,5,7 ,8 | |
| A | DE-A- 748 379 <br> --- | 4,6,9 | |
| A | GB-A-2 019 822 (ALBRIGHT & WILSON LTD) <br> * Insgesamt * <br> --- | 1-9 | |
| A | US-A-4 318 743 (BLASKO et al.) <br> * Insgesamt * <br> --- | 1-9 | |
| A | EP-A-0 070 451 (BASF) <br> * Insgesamt * <br> --- | 1-9 | RECHERCHIERTE SACHGEBIETE (Int. Cl.4) |
| A | US-A-3 892 698 (BURKE) <br> * Zusammenfassung; Beispiele 2,3,5; Spalte 12, Zeilen 24-55; Tablle A; Spalte 16, Zeilen 43-56; Spalte 23, Zeilen 20-38 * <br> --- | 1-9 | B 01 F <br> C 09 D |
| A | DE-B-1 000 680 (MOORE & MUNGER) <br> * Ansprüche; Beispiele * <br> --- | 1-9 | |
| A | GB-A-2 001 333 (WOELLNER-WERKE) <br> * Insgesamt * <br> ----- | 9 | |

Der vorliegende Recherchenbericht wurde für alle Patentansprüche erstellt

| Recherchenort | Abschlußdatum der Recherche | Prüfer |
|---|---|---|
| DEN HAAG | 05-07-1988 | DE LA MORINERIE B.M.S.B. |